(19) Europäisches Patentamt
European Patent Office
Office européen des brevets

(11) **EP 2 428 934 B1**

(12) **FASCICULE DE BREVET EUROPEEN**

(45) Date de publication et mention
de la délivrance du brevet:
**14.07.2021 Bulletin 2021/28**

(51) Int Cl.:
***G06T 7/00*** *(2017.01)*

(21) Numéro de dépôt: **11181029.7**

(22) Date de dépôt: **13.09.2011**

(54) **Procédé d'estimation du mouvement d'un porteur par rapport à un environnement et dispositif de calcul pour système de navigation**

Verfahren zur Schätzung der Bewegung eines Trägers im Verhältnis zu einer Umgebung, und Berechnungsvorrichtung für ein Navigationssystem

Method for estimating the movement of a carrier in relation to an environment and calculation device for a navigation system

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.09.2010 FR 1003651**

(43) Date de publication de la demande:
**14.03.2012 Bulletin 2012/11**

(73) Titulaire: **Airbus Defence and Space SAS**
**31402 Toulouse Cedex 4 (FR)**

(72) Inventeur: **Polle, Bernard**
**31650 Saint-Orens (FR)**

(74) Mandataire: **Plasseraud IP**
**66, rue de la Chaussée d'Antin**
**75440 Paris Cedex 09 (FR)**

(56) Documents cités:
**US-A1- 2003 012 410   US-A1- 2003 044 048**
**US-A1- 2006 078 162**

- **ZHENCHENG HU ET AL: "Real-time data fusion on tracking camera pose for direct visual guidance", INTELLIGENT VEHICLES SYMPOSIUM, 2004 IEEE PARMA, ITALY JUNE 14-17, 2004, PISCATAWAY, NJ, USA,IEEE, 14 juin 2004 (2004-06-14), pages 842-847, XP010727757, DOI: DOI:10.1109/IVS.2004.1336494 ISBN: 978-0-7803-8310-4**
- **HONKAMAA P ET AL: "Interactive outdoor mobile augmentation using markerless tracking and GPS", PROCEEDINGS VIRTUAL REALITY INTERNATIONAL CONFERENCE (VRIC) , LAVAL, FRANCE,, 18 avril 2007 (2007-04-18), XP002588869,**
- **LUONG Q.-T.: "Self-Calibration of Moving Camera from Point Correspondances and Fundamental Matrices", INTERNATIONAL JOURNAL OF COMPUTER VISION, vol. 22, no. 3, 1997, pages 261-289, XP002633656,**
- **MIRISOLA L. G. B., DIAS J.: "Tracking from a Moving Camera with Attitide Estimates", , 2008, XP002633658, Extrait de l'Internet: URL:http://mail.isr.uc.pt/~mrl/admin/uploa d/icr08_mirisola_dias_Coimbra.pdf [extrait le 2011-04-13]**
- **Giuseppe Donato ET AL: "Stereoscopic helmet mounted system for real time 3D environment reconstruction and indoor ego-motion estimation", Proceedings of SPIE, vol. 6955, 3 April 2008 (2008-04-03), page 69550P, XP055481540, US DOI: 10.1117/12.777653 ISBN: 978-1-5106-1533-5**

EP 2 428 934 B1

**Description**

La présente invention appartient au domaine de la navigation de porteurs du type véhicules, robots, etc. Plus particulièrement, la présente invention concerne l'estimation du mouvement d'un porteur par rapport à un environnement vis-à-vis duquel ce porteur se déplace.

L'environnement est par exemple la surface d'un corps céleste, un autre véhicule, un relief structuré (ville, bâtiment), etc.

Le porteur doit pouvoir se déplacer de façon autonome par rapport à cet environnement, sans connaissance a priori de celui-ci, ou avec une connaissance a priori réduite. Pour cela, il a besoin de déterminer son mouvement par rapport à cet environnement.

Le mouvement du porteur est déterminé au moyen d'un système de navigation comprenant un ou plusieurs senseurs de navigation embarqués à bord dudit porteur. Le système de navigation détermine le mouvement par un traitement adapté des mesures fournies par les senseurs de navigation. Les senseurs de navigation peuvent être de différents types, par exemple récepteur GPS, accéléromètre, odomètre, gyroscope, etc.

L'estimation du mouvement du porteur par rapport à l'environnement s'effectue en mettant en œuvre un filtre de navigation combinant un modèle de déplacement (par exemple les équations de la cinématique du porteur) avec les mesures de navigation fournies par les senseurs de navigation.

Toutefois, il existe de nombreux scénarios dans lesquels le système de navigation ne permet pas à lui seul d'estimer correctement le mouvement du porteur relativement à l'environnement.

C'est le cas par exemple d'un porteur à roues évoluant à la surface d'un terrain et muni d'une odométrie mesurant la rotation des roues. Les mesures odométriques ne suffisent pas à reconstituer le mouvement du porteur lorsque celui-ci dérape ou glisse sur le terrain.

C'est également le cas d'un porteur se déplaçant par rapport à un corps céleste et possédant une centrale de navigation inertielle fournissant des mesures de vitesses angulaires et d'accélérations linéaires suivant au moins trois axes indépendants. Un filtre de navigation traite ces mesures à haute cadence (typiquement 150 Hertz) en utilisant un modèle de champ de gravité local, par exemple à travers un filtre de Kalman étendu, afin de restituer position et vitesse du porteur par rapport au corps céleste. Les dérives inévitables des senseurs de navigation inertiels et la méconnaissance initiale de la position du porteur par rapport à l'environnement sont autant de sources d'erreurs sur l'estimation du mouvement dudit porteur, en particulier sur l'estimation de sa position par rapport à l'environnement. Ces erreurs s'accumulent et se propagent dans le temps sur les estimations suivantes.

C'est également le cas d'un porteur muni d'un récepteur GPS. Bien qu'un tel récepteur GPS soit généralement adapté à fournir une estimation précise de la position du porteur (typiquement au mètre près dans certains cas), cette précision se dégrade en cas de perte ou de corruption des mesures GPS. Une telle perte ou corruption des mesures GPS peut se produire notamment du fait d'obstacles sur un canal radio entre le porteur et l'émetteur GPS et/ou du fait de phénomènes de multi-trajet sur ledit canal radio.

Afin de remédier à ces limitations, il est connu de mettre en œuvre un système de vision et de munir le porteur d'un ou de plusieurs senseurs de vision, qui réalisent l'acquisition d'images à deux dimensions (images 2D) de l'environnement.

Les informations provenant du système de vision sont traitées par le système de navigation. Pour cela, le filtre de navigation est augmenté pour prendre en compte les mesures fournies par le système de vision.

De nombreuses implémentations numériques du filtre de navigation augmenté peuvent être élaborées, par exemple, filtre de Kalman, filtre de Kalman étendu, filtre d'information, filtre particulaire, filtre bayésien, etc.

Des exemples de tels systèmes de navigation augmentés sont par exemple décrits, dans le contexte de porteurs du type véhicules spatiaux, dans les publications scientifiques suivantes :

- « Navigation for Planetary Approach and Landing », B. Frapard et al, 5th International ESA Conférence on Guidance Navigation and Control Systems, 22-25 October 2002, Frascati, Italy ;
- « Autonomous Navigation Concepts for Interplanetary Missions », B. Polie et al, IFAC Symposium on Automatic Control in Aerospace 14-18 Juin 2004, Saint Petersburg, Russia ;
- « Mars Sample Return : Optimising the Descent and Soft Landing for an Autonomous Martian Lander », X. Sembély et al, Symposium on Atmospheric Reentry Vehicles and Systems, 23rd March 2005, Arcachon, France ;
- « Vision Navigation for European Landers and the NPAL Project », G. Bodineau et al, IFAC Symposium on Automatic Control in Aerospace, 25-29 Juin 2007, Toulouse, France.

Dans ces publications scientifiques, on considère un système de navigation inertielle basé sur des mesures de navigation parmi lesquelles des mesures d'accélérations linéaires du véhicule selon les trois axes d'un repère de référence lié au véhicule, et des mesures de vitesses angulaires du véhicule selon ces trois axes. Le vecteur d'états du filtre de navigation inertielle comporte des états relatifs au mouvement tels que la position, vitesse et angles d'attitude du véhicule dans un repère de référence lié à l'environnement. Le filtre de navigation propage (étape de prédiction) une estimation du vecteur d'états en prenant en compte un modèle de champ de gravité local, ainsi que la covariance des erreurs d'estimation de ces états. Le filtre de navigation recale (étape de mise à jour) l'estimation du vecteur d'états, et par conséquent du mouvement du véhicule à partir des mesures de navigation.

Dans ces publications scientifiques, le système de navigation inertielle est combiné avec un système de vision constitué d'une caméra embarquée dans le véhicule fournissant des images 2D de l'environnement à une fréquence typique de l'ordre de 10 à 100 Hertz.

Dans une image, des zones caractéristiques de l'environnement sont identifiées. Une zone caractéristique de l'environnement est une zone dont la représentation dans l'image, en tant qu'ensemble de pixels, présente la propriété de pouvoir être retrouvée d'une image à l'autre, par exemple par corrélation d'image ou par reconnaissance de forme. Une zone caractéristique de l'image peut être par exemple une vignette de quelques pixels à quelques dizaines de pixels dans lesquelles il existe des variations de luminance ou de texture ou de contraste dans au moins deux directions.

On suit les zones caractéristiques de l'environnement d'une image à l'autre par corrélation d'image. On associe à chaque zone caractéristique un point sur l'image, dit « point caractéristique de l'image » $M_i$. Le point caractéristique $M_i$ est par exemple le barycentre radiométrique ou géométrique de la vignette de pixels représentant cette zone caractéristique, ou un point particulier de cette zone caractéristique. Le déplacement des points caractéristiques $M_i$ d'une image à l'autre est représentatif du mouvement de translation et de rotation du véhicule par rapport à l'environnement.

Le mouvement du véhicule en position et attitude est estimé en augmentant le vecteur d'états du filtre de navigation inertielle avec les coordonnées, dans un repère de référence, de points caractéristiques $M'_i$ de l'environnement représentés par les points caractéristiques $M_i$ de l'image. Un repère de référence lié au porteur est désigné par (O,X,Y,Z), et est par exemple défini en considérant O comme étant le centre du plan focal de la caméra, Z comme étant l'axe optique de la caméra, et (X,Y) comme étant le plan focal de la caméra.

Pour estimer le vecteur d'états du filtre de navigation, on utilise, outre les mesures du système de navigation inertielle, 2M mesures correspondant aux directions des vecteurs $OM'_i$ dans le repère de référence.

Le filtre de navigation étant ainsi augmenté tant au niveau des états qu'au niveau des mesures, on estime le vecteur d'états du filtre de navigation en fonction d'un modèle d'évolution temporelle des états du système et un modèle des différentes mesures.

Toutefois, l'inconvénient principal des systèmes de navigation utilisant également des mesures issues d'images réside dans le fait que l'estimation de l'état du porteur, au moyen d'un filtre de navigation ainsi augmenté d'états et de mesures associés aux points caractéristiques $M'_i$ nécessite une importante puissance de calcul.

De plus, de tels systèmes de navigation sont très sensibles à la qualité des zones caractéristiques de l'environnement. En particulier, les zones caractéristiques doivent être des éléments immobiles de l'environnement, et considérer par erreur un élément mobile de l'environnement comme étant une zone caractéristique est très préjudiciable à la précision de l'estimation du mouvement du véhicule.

Le document US 2003/012410 A1 concerne un système et un procédé permettant de déterminer une estimation de pose d'une caméra à l'aide de caractéristiques de scène réelles.

La présente invention a pour objectif de proposer un procédé d'estimation du mouvement d'un porteur qui permet d'exploiter des mesures obtenues à partir d'images de l'environnement, tout en limitant l'impact d'un point de vue complexité de traitement.

La présente invention a également pour objectif de proposer un tel procédé qui permet, dans certains modes de mise en œuvre, d'améliorer la robustesse de l'estimation vis-à-vis des zones caractéristiques de l'environnement identifiées dans les images.

Selon un premier aspect, la présente invention concerne un procédé d'estimation du mouvement d'un porteur par rapport à un environnement vis-à-vis duquel ledit porteur se déplace, le porteur embarquant au moins un senseur de navigation et au moins un senseur de vision produisant des images 2D de l'environnement. Le procédé comporte des étapes de : i) identification, dans des images acquises par le senseur de vision, d'éléments caractéristiques des images représentant des éléments caractéristiques de l'environnement, ii) calcul, en fonction d'éléments caractéristiques des images suivis d'une image à l'autre d'un triplet d'images acquises à des instants différents, d'au moins une mesure condensée représentative de caractéristiques du mouvement du porteur au cours de l'acquisition des images dudit triplet, et iii) estimation du mouvement par un filtre de navigation, en fonction de mesures de navigation réalisées par le senseur de navigation et en fonction de l'au moins une mesure condensée.

Suivant des modes particuliers de mise en œuvre, le procédé d'estimation comporte l'une ou plusieurs des caractéristiques suivantes, prises isolément ou suivant toutes les combinaisons techniquement possibles.

De préférence, on détermine, au cours de l'étape de calcul, une mesure condensée représentative d'un rapport des distances parcourues par le porteur entre les instants d'acquisition de deux paires d'images dudit triplet, en fonction d'éléments caractéristiques des images du triplet représentant des éléments caractéristiques de l'environnement visibles sur chacune des trois images dudit triplet.

De préférence, on détermine, au cours de l'étape de calcul, au moins une mesure condensée représentative d'une direction de déplacement du porteur entre les instants d'acquisition d'une paire d'images du triplet, en fonction d'éléments caractéristiques de cette paire d'images représentant des éléments caractéristiques de l'environnement visibles sur chacune des deux images de cette paire.

De préférence, on détermine, au cours de l'étape de calcul, au moins une mesure condensée représentative d'une pose relative normalisée entre les instants d'acquisition d'une paire d'images du triplet, en fonction d'éléments caractéristiques de cette paire d'images représentant des éléments caractéristiques de l'environnement visibles sur chacune des deux images de cette paire.

De préférence, les éléments caractéristiques sont des points caractéristiques et/ou des objets caractéristiques ou une ou des surfaces caractéristiques.

De préférence, les images du triplet sont des images sélectionnées parmi une pluralité d'images acquises par le senseur de vision.

De préférence, au moins une image du triplet est une image pour laquelle un critère de détection de déplacement du porteur est vérifié.

De préférence, le critère de détection de déplacement du porteur est vérifié pour une seconde image lorsque, une première image étant sélectionnée et une pluralité d'éléments caractéristiques de l'environnement, au nombre de N, étant visibles dans ladite première image :

- au moins Nb des N éléments caractéristiques de l'environnement ont disparu dans ladite seconde image, ou
- au moins Nb nouveaux éléments caractéristiques de l'environnement sont apparus dans ladite seconde image,

Nb étant sensiblement égal à $r_P$. N, rp étant un pourcentage prédéfini.

De préférence, le pourcentage prédéfini rp est égal ou supérieur à 20%, de préférence sensiblement égal à 25%.

De préférence, le procédé comporte une étape de recherche d'éléments caractéristiques aberrants parmi la pluralité d'éléments caractéristiques des images, des éléments caractéristiques considérés comme aberrants n'étant pas considérés au cours de l'étape de calcul.

De préférence, l'étape de recherche d'éléments caractéristiques aberrants des images comporte les sous-étapes de :

- établissement de groupes d'éléments caractéristiques représentant au moins cinq éléments caractéristiques de l'environnement visibles sur chacune des images d'une paire et/ou du triplet à utiliser pour calculer une mesure condensée,
- calcul, pour chaque groupe d'éléments caractéristiques des images, d'une estimation de la mesure condensée à calculer,
- recherche de groupes d'éléments caractéristiques aberrants pour lesquels l'estimation de ladite mesure condensée à calculer est aberrante par rapport à l'ensemble des estimations de ladite mesure condensée à calculer.

De préférence, le vecteur d'états du filtre de navigation comporte l'état du porteur aux instants d'acquisition des images du triplet.

De préférence, une mesure condensée représentative d'une pose relative normalisée entre les instants d'acquisition d'au moins une paire du triplet est fournie au filtre de navigation sensiblement à l'instant d'acquisition de la deuxième image de ladite paire (c'est-à-dire l'image la plus récente).

De préférence, au cours de l'étape de calcul, on estime l'erreur commise sur l'estimation de l'au moins une mesure condensée et, au cours de l'étape d'estimation, le mouvement du porteur est estimé en fonction de l'estimation de l'erreur commise sur l'estimation de l'au moins une mesure condensée.

Selon un second aspect de l'invention, la présente invention concerne un dispositif de calcul pour système de navigation d'un porteur embarquant au moins un senseur de navigation et au moins un senseur de vision. Le dispositif de calcul comporte des moyens configurés pour estimer le mouvement du porteur conformément à l'un quelconque des modes de mise en œuvre du procédé d'estimation objet de l'invention.

L'invention sera mieux comprise à la lecture de la description suivante, donnée à titre d'exemple nullement limitatif, et faite en se référant aux figures qui représentent :

- Figure 1 : un diagramme représentant les principales étapes d'un procédé d'estimation du mouvement d'un porteur selon l'invention,
- Figure 2 : une représentation schématique, dans le plan focal d'un instrument d'observation, de traces virtuelles formées par des points caractéristiques suivis dans plusieurs images acquises consécutivement par ledit senseur de vision,
- Figure 3 : une représentation schématique du déplacement d'un porteur par rapport à un environnement, illustrant certaines définitions employées dans la description,

- Figure 4a : un diagramme représentant les principales étapes d'un mode particulier de mise en œuvre d'un procédé d'estimation du mouvement d'un porteur selon l'invention,
- Figure 4b : un diagramme représentant de façon plus détaillée un mode préféré de mise en œuvre d'une étape particulière du procédé d'estimation de la figure 4a.

La présente invention concerne un procédé 10 d'estimation du mouvement d'un porteur par rapport à un environnement 20 vis-à-vis duquel ledit porteur est en mouvement.

Dans le contexte de l'invention, le terme « mouvement » est pris au sens large, c'est-à-dire tout paramètre relatif à la trajectoire en position et attitude du porteur par rapport à l'environnement 20 et/ou permettant de prévoir ladite trajectoire. L'estimation du mouvement comprend l'estimation d'au moins un parmi les paramètres suivants : position, attitude, vitesse, accélération. Dans le cas le plus courant, on cherche à estimer l'ensemble du mouvement, c'est-à-dire les paramètres de position, attitude, vitesse linéaire et vitesse angulaire du porteur.

Le mouvement du porteur est estimé à des fins de navigation, c'est-à-dire à des fins d'estimation et de prévision de la trajectoire du porteur par rapport à l'environnement 20. On comprend que l'invention s'applique à tout type de porteur dont on cherche à estimer le mouvement à des fins de navigation, tel qu'un véhicule terrestre, aérien ou spatial, un robot, un missile, etc.

L'invention est mise en œuvre par un système de navigation exploitant des mesures de navigation effectuées par au moins un senseur de navigation embarqué par le porteur, et des images à deux dimensions réalisées par au moins un senseur de vision également embarqué par ledit porteur.

Chaque senseur de navigation peut être de tout type, comme par exemple récepteur GPS, accéléromètre, odomètre, gyroscope, etc. Un exemple préféré de combinaison de senseurs de navigation permettant l'estimation de l'ensemble du mouvement du porteur comprend une centrale inertielle mesurant les vitesses angulaires et les accélérations linéaires suivant les trois axes d'un repère de référence lié au porteur. Ladite centrale inertielle est complétée de préférence par un récepteur GPS, et/ou un altimètre, et/ou un odomètre, etc.

Le système de navigation comporte un dispositif de calcul du type ordinateur programmé, comportant au moins un microprocesseur, et des moyens de mémorisation (disque dur magnétique, mémoire flash, disque optique, etc.) dans lesquels est mémorisé un produit programme d'ordinateur, sous la forme d'un ensemble d'instructions de code de programme à exécuter pour mettre en œuvre les différentes étapes du procédé 10 d'estimation du mouvement du porteur. Suivant certains modes de réalisation, le dispositif de calcul comporte également un ou des circuits intégrés, de type ASIC, FPGA, etc., adaptés à mettre en œuvre tout ou partie des étapes du procédé 10.

Le dispositif de calcul est indifféremment embarqué dans le porteur, ou déporté, c'est-à-dire localisé ailleurs que dans le porteur, par exemple dans une station sol dans le cas d'un porteur de type véhicule spatial.

Le porteur embarque au moins un senseur de vision qui peut être de tout type adapté à produire une image à deux dimensions (2D) de l'environnement, comme par exemple une caméra optique, une caméra infrarouge, un radar imageur, etc. Un senseur de vision est adapté à réaliser l'acquisition d'images de l'environnement, par exemple sous la forme d'une matrice de pixels fournissant une information physique sur la zone de l'environnement placée dans le champ de vue de ce senseur de vision. Les images sont par exemple des matrices de 1000x1000 pixels, à une fréquence typique comprise entre 10 et 100 Hertz.

Il est à noter qu'un système de vision monoculaire (par opposition notamment à stéréoscopique), comprenant un seul senseur de vision, suffit pour la mise en œuvre de l'invention. Dans la suite de l'exposé, on se place dans le cas non limitatif où le porteur embarque un seul senseur de vision adapté à fournir des images 2D de l'environnement.

Selon l'invention, l'estimation du mouvement du porteur est réalisée au moyen d'un filtre d'estimation, dit « filtre de navigation », qui prend en entrée les informations déterminées à partir des mesures réalisées par le ou les senseurs de navigation et par le senseur de vision, et combine lesdites informations afin d'estimer le mouvement du porteur.

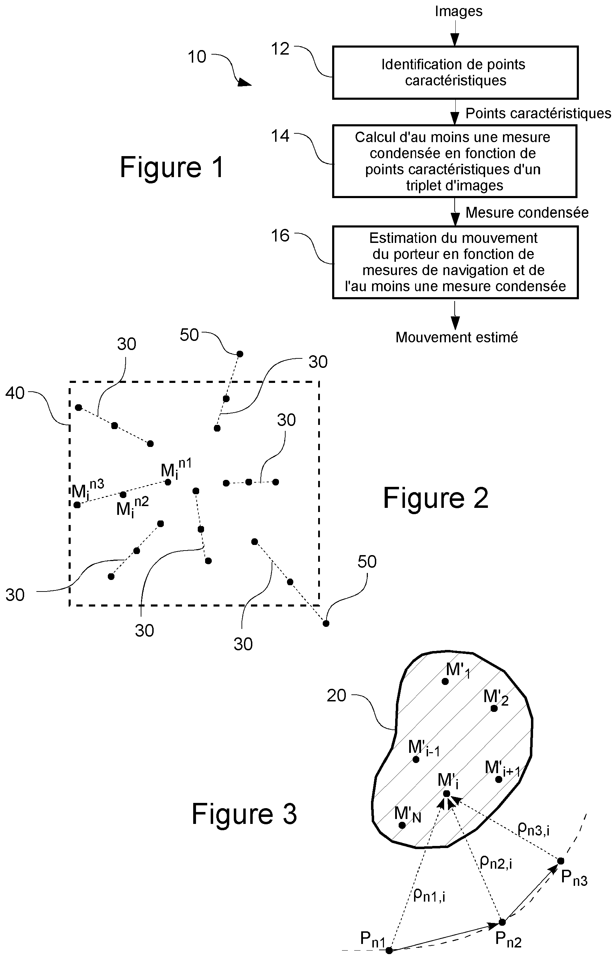

La figure 1 représente, de façon très schématique, un mode préféré de mise en œuvre du procédé 10 d'estimation, basé sur l'identification de points caractéristiques de l'environnement. Tel qu'illustré par la figure 1, le procédé 10 d'estimation comporte les étapes :

- 12 identification de points caractéristiques $M_i$ dans des images acquises par le senseur de vision, représentant des points caractéristiques de l'environnement,
- 14 calcul, en fonction de points caractéristiques des images suivis d'une image à l'autre d'un triplet d'images acquises à des instants différents, d'au moins une mesure condensée représentative de caractéristiques du mouvement du porteur au cours de l'acquisition des images dudit triplet,
- 16 estimation du mouvement par le filtre de navigation qui prend en entrée des mesures de navigation réalisées par le senseur de navigation et l'au moins une mesure condensée.

De préférence, les étapes du procédé 10 d'estimation sont itérées, c'est-à-dire que des mesures condensées sont calculées pour des triplets successifs d'images, chacune des mesures condensées calculées pour ces triplets successifs étant fournies en entrée du filtre de navigation.

Etape 12 d'identification de points caractéristiques

L'identification de points caractéristiques dans une image s'appuie sur la recherche de zones caractéristiques de l'image correspondant à des zones caractéristiques supposées fixes de l'environnement et visibles dans cette image. Par exemple, on identifie les zones caractéristiques dans une image en déterminant des vignettes de pixels adjacents qui présentent de bonnes propriétés en termes de corrélation d'image.

On considère que l'on dispose de N zones caractéristiques identifiées. Les N zones caractéristiques peuvent correspondre au nombre total de zones caractéristiques, ou à un sous-ensemble de toutes les zones caractéristiques identifiées. Dans ce dernier cas, on garde de préférence les N zones caractéristiques pour lesquelles est vérifié un critère géométrique (les zones caractéristiques sont réparties de façon sensiblement uniforme dans l'image, avantageusement pas trop proches des bords de l'image) et/ou un critère de corrélation (les N zones caractéristiques qui présentent les meilleures propriétés de corrélation).

On suit ces N zones caractéristiques d'une image à l'autre, par exemple par corrélation d'image en exploitant les bonnes propriétés de corrélation des vignettes de pixels représentant ces zones caractéristiques. On associe à chaque zone caractéristique un point sur l'image, dit « point caractéristique de l'image » $M_i$, i étant compris entre 1 et N. Le point caractéristique $M_i$ de l'image est par exemple le barycentre radiométrique ou géométrique de la vignette de pixels représentant cette zone caractéristique, ou un point particulier de cette vignette de pixels. Chaque point caractéristique $M_i$ d'une image représente un point caractéristique $M'_i$ de l'environnement, supposé fixe par rapport à l'environnement.

Etape 14 de calcul d'au moins une mesure condensée

Le procédé 10 utilise au moins un triplet d'images de l'environnement, acquises à des instants différents, pour calculer au moins une mesure condensée représentative de caractéristiques du mouvement du porteur entre les instants d'acquisition des images du triplet.

Nous verrons plus loin dans la description que ce triplet d'images est de préférence sélectionné parmi toutes les images acquises par le senseur de vision.

On décrit à présent un exemple non limitatif de calcul de mesures condensées à partir des points caractéristiques $M_i$ de l'image dans chacune des images du triplet d'images.

On comprend que les conventions considérées ci-après, pour les besoins de la description de modes de mise en œuvre de l'invention, ne sont pas limitatives de l'invention qui pourrait être décrite de manière équivalente en adoptant d'autres conventions sans que l'invention en soit modifiée dans son principe.

On suppose, de manière non limitative et à des fins de clarté de l'exposé, que les instants d'acquisition des images sont des multiples d'une période temporelle constante $\Delta T$. Etant donné un instant d'acquisition initial $t_0$, on comprendra que l'image de rang n est l'image prise à l'instant $t_n = t_0 + n \cdot \Delta T$ que l'on désignera par « instant n ». De façon générale, on comprendra que si l'indice n d'une variable $W_n$ se réfère au temps, $W_n$ correspond à la valeur de cette variable $W(t)$ à l'instant $t = t_0 + n \cdot \Delta T$.

Dans la suite de la description, on se place dans le cas où l'instant courant est n. Parmi l'ensemble des images prises avant l'instant n, le triplet d'images est constitué par trois images $I_{n1}$, $I_{n2}$, $I_{n3}$ (n1 < n2 < n3), dites « images de recalage ».

Tel qu'on l'a vu, les points caractéristiques $M_i$ se déplacent d'une image à l'autre lorsque le porteur est en mouvement. Le déplacement des points caractéristiques $M_i$, $1 \leq i \leq N$, d'une image à l'autre est représentatif du mouvement en translation et en rotation du porteur. Le déplacement des points caractéristiques $M_i$ d'une image à l'autre peut être représenté sous la forme de traces 30 virtuelles illustrant les trajectoires de ces points caractéristiques dans le plan focal 40 du senseur de vision.

Du fait du déplacement du porteur par rapport à l'environnement, en translation et/ou en rotation, les zones caractéristiques identifiées dans une première image ne sont pas nécessairement visibles dans les images suivantes. On comprend donc que certaines zones caractéristiques pourront « disparaître » d'une image à l'autre, tandis que de nouvelles zones caractéristiques pourront être identifiées.

La figure 2 représente un exemple de telles traces 30 dans le plan focal 40 du senseur de vision, entre les instants d'acquisition n1 et n3.

On désigne par $M_i^{n1}$, $M_i^{n2}$ et $M_i^{n3}$ les positions du point caractéristique $M_i$ dans chacune des images $I_{n1}$, $I_{n2}$ et $I_{n3}$. La trace 30 virtuelle formée par le déplacement du point caractéristique $M_i$ est formée par les positions $M_i^{n1}$, $M_i^{n2}$ et $M_i^{n3}$ représentées dans le plan focal 40 du senseur de vision.

Tel qu'on l'a vu précédemment, du fait du déplacement du porteur, certains points caractéristiques $M_i$ vont disparaître d'une image à l'autre. Ce phénomène est illustré par la présence de points caractéristiques en dehors du plan focal 40 dans la figure 2 (désignés sur cette figure par la référence 50). Cette représentation de points caractéristiques de l'image en dehors du plan focal 40 est virtuelle, puisque les points caractéristiques $M'_i$ en dehors du champ de vision de l'instrument d'observation n'apparaissent pas l'image.

On considère dans un premier temps des paires d'images de recalage du triplet, et on calcule à partir de ces paires, des mesures condensées dont une au moins est utilisée par le filtre de navigation du système de navigation.

On considère donc une paire d'images parmi le triplet d'images de recalage, par exemple les images $I_{n1}$, $I_{n2}$ et on considère des points caractéristiques $M_i$ représentant des points caractéristiques $M'_i$ de l'environnement visibles sur les deux images de cette paire.

Dans un premier temps, on exprime, à partir des positions $M_i^{n1}$ et $M_i^{n2}$ des points $M_i$ respectivement dans l'image de recalage $I_{n1}$ et dans l'image de recalage $I_{n2}$, la pose relative entre lesdites deux images de recalage $I_{n1}$ et $I_{n2}$.

On entend par « pose relative » la variation de la position et de l'attitude du senseur de vision (et donc du porteur, le senseur de vision étant supposé fixe par rapport au porteur ou avec une orientation connue à tout instant par rapport audit porteur) vis-à-vis de l'environnement 20 entre les deux instants n1 et n2 d'acquisition des images de recalage $I_{n1}$ et $I_{n2}$.

Dans la suite de la description, on se place, sauf indication contraire, dans le repère de référence $(O,X,Y,Z)$ associé au senseur de vision, par exemple défini en considérant le point de référence O comme étant le centre du plan focal du senseur de vision, Z comme étant l'axe optique dudit senseur de vision, et $(X,Y)$ comme étant le plan focal du senseur de vision.

La pose relative du senseur de vision est par exemple exprimée dans le repère de référence associé au senseur de vision tel qu'il est orienté à l'instant n2, désigné par $R_{n2}$. Différentes représentations sont possibles pour la pose relative, et on se place dans le cas où ladite pose relative est exprimée sous la forme $(\boldsymbol{P_{n1}P_{n2}}, \delta\theta_{n1n2})$, expression dans laquelle :

- $P_{ni}$ est la position de l'origine O du repère de référence $R_{ni}$, ni étant égal à n1 ou n2,
- $\boldsymbol{P_{n1}P_{n2}}$ est le vecteur constitué par $P_{n1}$ et $P_{n2}$, d'origine $P_{n1}$,
- $\delta\theta_{n1n2}$ est la matrice de passage qui transforme les coordonnées d'un vecteur dans le repère de référence $R_{n1}$ en les coordonnées de ce vecteur dans le repère de référence $R_{n2}$.

La figure 3 représente de façon très schématique les positions $P_{n1}$, $P_{n2}$ et $P_{n3}$ de l'origine O aux instants n1, n2 et n3, ainsi que l'environnement 20 vis-à-vis duquel le porteur se déplace et des points caractéristiques $M'_i$ de cet environnement.

Pour tout point caractéristique $M'_i$ de l'environnement, on a la relation vectorielle suivante :

$$\boldsymbol{P_{n1}P_{n2}} = \boldsymbol{P_{n1}M'_i} - \boldsymbol{P_{n2}M'_i} \qquad (1)$$

L'expression (1) peut s'exprimer de manière équivalente sous la forme normalisée suivante :

$$\frac{\boldsymbol{P_{n1}P_{n2}}}{\left\|\boldsymbol{P_{n1}P_{n2}}\right\|} = \frac{\left\|\boldsymbol{P_{n1}M'_i}\right\|}{\left\|\boldsymbol{P_{n1}P_{n2}}\right\|} \cdot \frac{\boldsymbol{P_{n1}M'_i}}{\left\|\boldsymbol{P_{n1}M'_i}\right\|} - \frac{\left\|\boldsymbol{P_{n2}M'_i}\right\|}{\left\|\boldsymbol{P_{n1}P_{n2}}\right\|} \cdot \frac{\boldsymbol{P_{n2}M'_i}}{\left\|\boldsymbol{P_{n2}M'_i}\right\|} \qquad (2)$$

expression dans laquelle on a désigné par $\|\boldsymbol{AB}\|$ la norme du vecteur $\boldsymbol{AB}$, c'est-à-dire la distance entre les points A et B.

En désignant par :

- $u_{n1n2}$ le vecteur unitaire (c'est-à-dire le vecteur de norme égale à 1) colinéaire au vecteur $\boldsymbol{P_{n1}P_{n2}}$,
- $u_{n1,i}$ le vecteur unitaire de la ligne de visée du senseur de vision vers le point caractéristique $M'_i$ de l'environnement 20 à l'instant n1,
- $u_{n2,i}$ le vecteur unitaire de la ligne de visée du senseur de vision vers le point caractéristique $M'_i$ de l'environnement 20 à l'instant n2,
- $\rho_{nj,i}$ la distance entre le point caractéristique $M'_i$ et la position $P_{nj}$ du porteur à l'instant d'acquisition nj (j égal à 1 ou 2),
- $z_{nj,i}$ le rapport entre la distance $\rho_{nj,i}$ et la distance $\|\boldsymbol{P_{n1}P_{n2}}\|$ parcourue par le point de référence O entre les instants n1 et n2,

l'expression (2) peut s'exprimer sous la forme équivalente suivante :

$$U_{n1n2} = z_{n1,i} \cdot U_{n1,i} - z_{n2,i} \cdot U_{n2,i} \qquad (3)$$

La relation vectorielle (3) peut être exprimée en termes de coordonnées dans le repère de référence $R_{n2}$ à l'instant n2 sous la forme suivante :

$$U_{n1n2}|R_{n2} = z_{n1,i} \cdot \delta\theta_{n1n2} \cdot U_{n1,i}|R_{n1} - z_{n2,i} \cdot U_{n2,i}|R_{n2} \qquad (4)$$

expression dans laquelle :

- $u_{n1n2}|R_{n2}$ et $u_{n2,i}|R_{n2}$ désignent les coordonnées des vecteurs unitaires respectivement $u_{n1n2}$ et $u_{n2,i}$ dans le repère de référence Rn2,
- $u_{n1,i}|R_{n1}$ désigne les coordonnées du vecteur unitaire $u_{n1,i}$ dans le repère de référence $R_{n1}$.

On comprend que chaque point caractéristique M'$_i$ visible à la fois dans l'image de recalage $I_{n1}$ et l'image de recalage $I_{n2}$ peut conduire à ce type de relation vectorielle (4).

Dans l'expression (4), et pour chaque point caractéristique M'$_i$ de l'environnement 20, les termes $u_{n1n2}|R_{n2}$, $\delta\theta_{n1n2}$, $z_{n1,i}$ et $z_{n2,i}$ représentent des termes non connus a priori, alors que les termes $u_{n1,i}|R_{n1}$ et $u_{n2,i}|R_{n2}$, qui sont les lignes de vue de ces points caractéristiques dans le repère du senseur de vision, peuvent s'exprimer directement à partir des positions connues $M_i^{n1}$ et $M_i^{n2}$ des points caractéristiques $M_i$ associés aux points caractéristiques M'$_i$ de l'environnement respectivement dans les images $I_{n1}$ et $I_{n2}$.

Dans la suite de la description, on désigne par « pose relative normalisée » l'ensemble des paramètres $(u_{n1n2}|R_{n2}, \delta\theta_{n1n2})$ (normalisée au sens où le vecteur unitaire $u_{n1n2}|R_{n2}$ correspond seulement à la direction du vecteur $P_{n1}P_{n2}$ sans indication sur la distance entre $P_{n1}$ et $P_{n2}$). Une pose relative normalisée comprend donc 5 paramètres scalaires indépendants : deux paramètres décrivant la direction du vecteur unitaire $u_{n1n2}|R_{n2}$ et trois paramètres (angles d'Euler ou quaternion normalisé) donnant la matrice de passage $\delta\theta_{n1}n_2$.

On comprend que l'on dispose, pour chaque point caractéristique M'$_i$ visible sur les images de recalage $I_{n1}$ et $I_{n2}$, d'une relation vectorielle (4) constituée par 3 relations scalaires. Ces 3 relations scalaires relient les positions $M_i^{n1}$ et $M_i^{n2}$, les 5 paramètres de pose relative normalisée à déterminer et les deux rapports de distances $z_{n1,i}$ et $z_{n2,i}$ à déterminer également.

Du fait des contraintes de normalisation $||u_{n1n2}|R_{n2}|| = 1$, les 3 relations scalaires précédentes conduisent en fait à 2 relations scalaires indépendantes.

D'autre part, les rapports de distance $z_{n1,i}$ et $z_{n2,i}$ ne sont pas indépendants mais liés entre eux par la relation :

$$z_{n2,i} = (z_{n1,i} \cdot \delta\theta_{n1n2} \cdot U_{n1,i}|R_{n1} - U_{n1n2}|R_{n2}) \cdot U_{n2,i}|R_{n2} \qquad (5)$$

obtenue en appliquant le produit scalaire par le vecteur $u_{n2,i}|R_{n2}$ aux deux membres de l'équation (4). On comprend par conséquent que, pour chaque point caractéristique M'$_i$, un seul des deux rapports de distance $z_{n1,i}$ et $z_{n2,i}$ constitue un paramètre indépendant.

Les 5 paramètres de pose relative normalisée sont les mêmes pour tous les points caractéristiques M'$_i$ visibles sur les deux images de recalage $I_{n1}$ et $I_{n2}$, alors que les rapports de distance $z_{n1,i}$ et $z_{n2,i}$, liés entre eux par la relation (5), dépendent du point caractéristique M'$_i$ considéré.

En considérant que l'on a $N_{12}$ points caractéristiques M'$_i$ visibles sur les deux images $I_{n1}$ et $I_{n2}$, on dispose alors de $2 \times N_{12}$ relations scalaires indépendantes (les $N_{12}$ relations vectorielles (4)) pour ($N_{12}$+5) inconnues (5 paramètres de pose relative normalisée et $N_{12}$ rapports de distance indépendants). On comprend donc que la pose relative normalisée et les rapports de distance peuvent être estimés dès que l'on a $N_{12}$ = 5 points caractéristiques M'$_i$ de l'environnement 20 visibles sur les deux images $I_{n1}$ et $I_{n2}$.

Il est avantageux de considérer un nombre de points caractéristiques M'$_i$ supérieur à 5, voire significativement supérieur à 5, pour améliorer la précision de l'estimation des mesures condensées, ce qui est toujours le cas dans la pratique car le nombre de points caractéristiques dans une image d'environnement typique de dimension 1000x1000 pixels peut facilement s'élever à plusieurs centaines. Lorsque les informations issues des images et fournies au filtre de navigation sont limitées aux seules mesures condensées, on peut avantageusement considérer un nombre de points caractéristiques plus important que dans l'art antérieur, sans augmenter la complexité des calculs effectués par ledit filtre de navigation. Dans l'art antérieur, le nombre d'états et de mesures augmentant le filtre de navigation est directement proportionnel au nombre N de zones caractéristiques conservées, alors que ce n'est plus le cas avec l'invention.

L'estimation de la pose relative normalisée entre les images $I_{n1}$ et $I_{n2}$ et des rapports de distance s'effectue par résolution du système constitué par l'ensemble des $2 \cdot N_{12}$ relations scalaires associées aux $N_{12}$ points caractéristiques $M'_i$ de l'environnement. Cette résolution peut s'effectuer selon tout procédé connu de l'homme de l'art, de préférence en mettant en œuvre une technique d'estimation non linéaire aux moindres carrés. En effet, ce type de technique permet d'estimer également la matrice de covariance $C_{n1n2}$ des erreurs d'estimation de ces variables (pose relative normalisée et rapports de distance), tout en la minimisant.

La résolution du système constitué par l'ensemble des $2 \cdot N_{12}$ relations scalaires susmentionnées permet d'obtenir une mesure condensée à partir des informations contenues dans les images $I_{n1}$ et $I_{n2}$, représentative de la pose relative normalisée entre les images $I_{n1}$ et $I_{n2}$, ainsi que la matrice de covariance des erreurs d'estimation de cette pose relative normalisée, matrice que l'on extrait de la matrice de covariance $C_{n1n2}$.

On peut éventuellement restreindre cette mesure condensée à l'estimation de la direction de déplacement du porteur entre les images $I_{n1}$ et $I_{n2}$, cette mesure condensée étant alors l'estimation du vecteur $\boldsymbol{u_{n1n2}}|R_{n2}$, en faisant l'hypothèse que les variations d'attitude sont estimées et/ou mesurées sans faire appel aux images acquises par le senseur de vision (par exemple en utilisant uniquement le système de navigation).

Au cours de l'étape 14 de calcul, on effectue de préférence le même type de traitement pour la paire d'images de recalage $I_{n2}$ et $I_{n3}$ que ceux effectués pour la paire d'images de recalage $I_{n1}$ et $I_{n2}$. Ce traitement s'effectue à partir des équations suivantes, établies pour chacun de $N_{23}$ points caractéristiques $M'_i$ communs aux deux images de recalage $I_{n2}$ et $I_{n3}$ :

$$\boldsymbol{u_{n2n3}}|R_{n3} = w_{n2,i} \cdot \delta\theta_{n2n3} \cdot \boldsymbol{u_{n2,i}}|R_{n2} - w_{n3,i} \cdot \boldsymbol{u_{n3,i}}|R_{n3} \qquad (6)$$

expression dans laquelle :

- $u_{n2n3}|R_{n3}$ et $\boldsymbol{u_{n3,i}}|R_{n3}$ désignent les coordonnées des vecteurs unitaires respectivement $\boldsymbol{u_{n2n3}}$ (colinéaire au vecteur $\boldsymbol{P_{n2}P_{n3}}$) et $\boldsymbol{u_{n3,i}}$ (colinéaire au vecteur $\boldsymbol{P_{n3}M'_i}$) dans le repère de référence $R_{n3}$,
- $u_{n2,i}|R_{n2}$ désigne les coordonnées du vecteur unitaire $\boldsymbol{u_{n2,i}}$ (colinéaire au vecteur $\boldsymbol{P_{n2}M'_i}$) dans le repère de référence $R_{n2}$,
- $\rho_{nj,i}$ la distance entre le point caractéristique $M'_i$ et la position $P_{nj}$ du porteur à l'instant d'acquisition $nj$ ($j$ égal à 2 ou 3),
- $w_{nj,i}$ le rapport entre la distance $\rho_{nj,j}$ et la distance $||\boldsymbol{P_{n2}P_{n3}}||$ parcourue par le point de référence O entre les instants $n2$ et $n3$,
- $\delta\theta_{n2n3}$ est la matrice de passage qui transforme les coordonnées d'un vecteur dans le repère de référence $R_{n2}$ en les coordonnées de ce vecteur dans le repère de référence $R_{n3}$I.

Comme pour la paire d'images de recalage $(I_{n1}, I_{n2})$, on estime, en fonction des positions $M_i^{n2}$ et $M_i^{n3}$ des points $M_i$ respectivement dans les images $I_{n2}$ et $I_{n3}$, les 5 paramètres de pose relative normalisée entre les instants $n2$ et $n3$, ainsi que les deux rapports de distances $w_{n2,i}$ et $w_{n3,i}$.

Cette estimation de la pose relative normalisée et des rapports de distance entre les instants $n2$ et $n3$, s'effectue suivant tout procédé connu de l'homme de l'art, de préférence en mettant en œuvre une technique d'estimation non linéaire aux moindres carrés à partir des équations (6). De préférence, on estime également la matrice de covariance $C_{n2n3}$ des erreurs d'estimation de ces variables.

Cette estimation permet d'obtenir une mesure condensée à partir des informations contenues dans les images $I_{n2}$ et $I_{n3}$, représentative de la pose relative normalisée entre les images $I_{n2}$ et $I_{n3}$, ainsi que la matrice de covariance des erreurs d'estimation de cette pose relative normalisée, matrice que l'on extrait de la matrice de covariance $C_{n2n3}$.

Il est à noter que rien n'exclut, suivant certains exemples de mise en œuvre, de restreindre cette mesure condensée à l'estimation de la direction de déplacement du porteur entre les images $I_{n2}$ et $I_{n3}$, cette mesure condensée étant alors l'estimation du vecteur $\boldsymbol{u_{n2n3}}|R_{n3}$.

On peut noter qu'outre les mesures condensées obtenues par estimation des poses relatives normalisées entre les paires d'image $(I_{n1}, I_{n2})$ et $(I_{n2}, I_{n3})$ du triplet d'images considéré, on pourrait former également des mesures condensées à partir de l'estimation de la pose relative normalisée entre les paires d'image $(I_{n1}, I_{n3})$. Cependant, la mesure condensée ainsi formée n'apporte pas d'information supplémentaire par rapport aux précédentes.

Au cours de l'étape 14 de calcul, on détermine un ensemble de points caractéristiques $M'_i$ visibles sur les trois images de recalage $I_{n1}$, $I_{n2}$, $I_{n3}$ du triplet. On désigne par $N_{123}$ le nombre de points caractéristiques $M'_i$ considérés, visibles sur les trois images de recalage du triplet.

Pour ces points caractéristiques $M'_i$, la relation suivante est vérifiée, par définition des paramètres $\rho_{n2,i}$ :

$$\rho_{n2,i} = w_{n2,i} \cdot ||\boldsymbol{P_{n2}P_{n3}}|| = z_{n2,i} \cdot ||\boldsymbol{P_{n1}P_{n2}}|| \qquad (7)$$

L'estimation des rapports de distances $w_{n2,i}$ et $z_{n2,i}$ comme exposé précédemment permet donc de déterminer à partir de l'équation (7) un autre type de mesure condensée, associée au triplet d'images $(I_{n1}, I_{n2}, I_{n3})$, représentative du rapport des distances parcourues $\delta = \|P_{n2}P_{n3}\| / \|P_{n1}P_{n2}\|$. Cette mesure condensée représentative du rapport des distances parcourues est par exemple une estimation de la valeur du rapport $\delta$, ou une estimation de la valeur d'une fonction de ce rapport, comme par exemple $\arctan(\delta)$.

Il est à noter que cette mesure condensée, représentative du rapport des distances parcourues, peut être calculée en même temps que les autres mesures condensées précédemment décrites, en mettant en œuvre une technique d'estimation non linéaire aux moindres carrés de ces mesures à partir des équations (4), (6), (7), de sorte que l'on puisse estimer simultanément la matrice de covariance des erreurs d'estimation associées à l'ensemble des mesures condensées qui seront utilisés par le filtre de navigation.

On comprend donc que, au cours de l'étape 14 de calcul, différentes mesures condensées peuvent être calculées, notamment une mesure représentative du rapport des distances parcourues, des mesures représentatives des poses relatives normalisées (éventuellement restreintes à des mesures condensées représentatives de la direction de déplacement du porteur). La quantité d'informations issues des images à traiter par le filtre de navigation est avantageusement limitée aux mesures condensées, et est par conséquent très réduite par rapport à l'art antérieur. En effet, la mesure condensée représentative du rapport des distances parcourues consiste essentiellement en un paramètre scalaire, et chaque mesure condensée représentative d'une pose relative normalisée consiste essentiellement en 5 paramètres scalaires.

Etape 16 d'estimation du mouvement du porteur

Au cours de l'étape 16 d'estimation, le mouvement du porteur est estimé au moyen du filtre de navigation qui prend en entrée des mesures de navigation réalisées par le ou les senseurs de navigation de navigation et au moins une mesure condensée. En d'autres termes, le filtre de navigation effectue une fusion entre, d'une part, des mesures de navigation et, d'autre part, au moins une mesure condensée déterminée à partir d'un triplet d'images acquises par le senseur de vision.

L'estimation du mouvement du porteur s'effectue de préférence au moins en fonction de la mesure condensée représentative du rapport des distances parcourues correspondant au triplet d'images $(I_{n1}, I_{n2}, I_{n3})$. L'utilisation à la fois de la mesure condensée représentative du rapport des distances parcourues et des mesures condensées représentatives des poses relatives normalisées correspond à un mode préféré de mise en œuvre du procédé 10 d'estimation.

L'estimation du mouvement du porteur met en œuvre un filtre de navigation pour lequel de nombreuses implémentations du filtre de navigation sont possibles, comme par exemple un filtre de Kalman, un filtre de Kalman étendu, un filtre d'information, un filtre particulaire, un filtre bayésien, etc. De tels filtres de navigation sont considérés comme connus de l'homme de l'art et on pourra se référer notamment aux références de publications scientifiques citées précédemment.

De façon très générale, ces filtres propagent au cours du temps une estimation de l'état du porteur ainsi que la matrice de covariance de l'erreur d'estimation de cet état à partir d'un modèle d'évolution temporelle de l'état, et ils recalent cette estimation et la matrice de covariance associée en fonction des mesures et de la covariance des erreurs de mesures qui lui sont fournies, dans l'hypothèse où ces mesures dépendent de l'état du porteur.

Le vecteur d'états du filtre de navigation comporte notamment l'état du porteur à l'instant n (c'est-à-dire le mouvement que l'on cherche à estimer), que l'on désigne par $X_n$. L'état $X_n$ comprend de préférence au moins 6 paramètres : 3 paramètres représentatifs de la position d'un repère de référence lié au porteur dans un repère de référence externe au porteur, pouvant être tout repère lié de façon déterministe à l'environnement, et 3 paramètres représentatifs de l'attitude dudit repère de référence lié au porteur dans ledit repère de référence externe au porteur.

De préférence, le vecteur d'états du filtre de navigation est augmenté, par rapport à l'art antérieur, pour inclure l'état du porteur aux instants n1, n2 et n3, désigné respectivement par $X_{n1}$, $X_{n2}$ et $X_{n3}$. Par exemple, les états $X_{n1}$, $X_{n2}$, $X_{n3}$ contiennent les six paramètres de position et d'attitude du repère de référence du porteur respectivement aux instants n1, n2, n3.

Selon l'invention, les mesures fournies au filtre de navigation pour recaler (ou mettre à jour) les estimations des états du porteur comprennent les mesures de navigation réalisées par le ou les senseurs de navigation et au moins une mesure condensée. Dans un mode préféré de mise en œuvre, les mesures condensées fournies au filtre de navigation comprennent, à partir de l'instant n2, l'estimation de la pose relative normalisée (ou l'estimation de la direction de déplacement) entre les instants n1 et n2, et à partir de l'instant n3, d'une part l'estimation de la pose relative normalisée (ou l'estimation de la direction de déplacement) entre les instants n2 et n3, et d'autre part la mesure du rapport de distances parcourues respectivement entre les instants n1 et n2, et entre les instants n2 et n3.

On note que, par définition, les mesures de pose relative normalisée et du rapport des distances parcourues s'expriment simplement et de façon analytique en fonction des paramètres de position et d'attitude inclus dans les états $X_{n1}$, $X_{n2}$, $X_{n3}$ du vecteur d'états augmenté. Cette relation entre mesures condensées et états $X_{n1}$, $X_{n2}$, $X_{n3}$ est un modèle

de mesures utilisé de manière classique par le filtre de navigation augmenté (filtre de Kalman par exemple).

De préférence, lorsque l'on a déterminé préalablement les covariances des erreurs sur l'estimation de tout ou partie des mesures condensées (estimation du rapport de distances parcourues, estimations de pose relative normalisée ou estimations de direction de déplacement), celles-ci sont également fournies au filtre de navigation, en complément des mesures de navigation et des mesures condensées, pour être traitées de manière classique par le filtre de navigation (filtre de Kalman par exemple).

L'hybridation des mesures de navigation avec la mesure condensée permet, dans certains cas pratiques, d'améliorer sensiblement la précision de l'estimation du mouvement du porteur.

Par exemple, on se place dans le cas où le déplacement du porteur est rectiligne, avec une accélération $a_1$ sensiblement constante entre les instants n1 et n2, et avec une accélération $a_2$ sensiblement constante entre les instants n2 et n3 (l'accélération $a_2$ pouvant être égale à l'accélération $a_1$, mais les accélérations $a_1$ et $a_2$ n'étant pas toutes deux nulles). Ce cas est représentatif, bien que très simplifié, d'un scénario d'atterrissage du porteur sur un relief, scénario dans lequel les accélérations $a_1$ et $a_2$ sont négatives.

Des calculs cinématiques simples permettent d'établir les relations suivantes :

$$\|\boldsymbol{P_{n1}P_{n2}}\| = v_1 \cdot \Delta t_{12} + \tfrac{1}{2} \cdot a_1 \cdot (\Delta t_{12})^2 \qquad (8a)$$

$$\|\boldsymbol{P_{n2}P_{n3}}\| = (v_1 + a1 \cdot \Delta t_{12}) \cdot \Delta t_{23} + \tfrac{1}{2} \cdot a_2 \cdot (\Delta t_{23})^2 \qquad (8b)$$

expressions dans lesquelles $\Delta t_{12} = t_{n2} - t_{n1}$ et $\Delta t_{23} = t_{n3} - t_{n2}$, et $v_1$ est la vitesse du porteur par rapport à l'environnement à l'instant n1.

On déduit des relations (8a) et (8b) que :

$$v_1 = \frac{\tfrac{1}{2}\cdot\delta\cdot a_1\cdot(\Delta t_{12})^2 - a_1\cdot\Delta t_{12}\cdot\Delta t_{23} - \tfrac{1}{2}\cdot a_2\cdot(\Delta t_{23})^2}{\Delta t_{23} - \delta\cdot\Delta t_{12}} \qquad (9)$$

Le fait que le mouvement est accéléré signifie que le rapport $\delta$ des distances parcourues entre respectivement les instants n2 et n3, et les instants n1 et n2, est différent du rapport $\Delta t_{23} / \Delta t_{12}$ (le porteur ne va pas à vitesse constante, en moyenne entre les instants n1 et n3). Alors, le dénominateur de l'expression (9) n'est pas nul et on voit que la connaissance de la mesure condensée représentative du rapport $\delta$ des distances parcourues, couplée à une connaissance de l'accélération, permet d'estimer la vitesse $v_1$ du porteur.

L'avantage offert par la prise en compte des images dans le système de navigation, est que la connaissance de la vitesse $v_1$ n'est pas obtenue en intégrant l'accélération dont la mesure est empreinte d'erreurs, ce qui évite les dérives et permet donc d'améliorer la précision de l'estimation de l'état $X_n$ du porteur, et donc de son mouvement par rapport à l'environnement 20.

La prise en compte des mesures condensées s'avère également avantageuse dans le cas où le système de navigation fournit une aide intermittente (par exemple un système de positionnement par satellites GPS ou autre dans un canyon urbain, ou un système odométrique dans un environnement glissant).

A titre d'exemple, on suppose que le système de navigation est opérationnel entre les instants n1 et n2, mais qu'il n'est plus opérationnel entre les instants n2 et n3. Le système de navigation fournit une estimation assez précise du déplacement $\boldsymbol{P_{n1}P_{n2}}$, et donc de la distance $\|\boldsymbol{P_{n1}P_{n2}}\|$ parcourue par le porteur entre les instants n1 et n2, mais il ne fournit plus d'estimation fiable entre les instants n2 et n3. La mesure condensée représentative du rapport des distances parcourues à l'instant n3 permet d'estimer, en fonction de l'estimation de la distance parcourue $\|\boldsymbol{P_{n1}P_{n2}}\|$ fournie par le système de navigation, la distance parcourue $\|\boldsymbol{P_{n2}P_{n3}}\|$ entre les instants n2 et n3. L'estimation de la distance parcourue $\|\boldsymbol{P_{n2}P_{n3}}\|$ combinée à la mesure condensée représentative de la pose relative normalisée entre les instants n2 et n3, permet d'estimer le déplacement $\boldsymbol{P_{n2}P_{n3}}$ On comprend donc que le système de vision peut se substituer au système de navigation déficient entre les instants n2 et n3. De proche en proche, on peut propager ainsi l'estimation des déplacements effectués, et donc de l'état du porteur en position et en attitude, jusqu'à ce que le système de navigation soit à nouveau opérationnel.

Le procédé 10 s'applique de façon séquentielle aux instants ultérieurs à n3 suivant les mêmes principes. Par exemple, à un instant n4 ultérieur à n3, on applique le procédé aux images de recalage $I_{n2}$, $I_{n3}$, $I_{n4}$, en remplaçant dans le vecteur d'états du filtre de navigation l'état $X_{n1}$ par l'état $X_{n4}$ du porteur à l'instant n4. On note qu'entre les instants n3 et n4, les informations visuelles traitées par le filtre de navigation augmenté sont avantageusement limitées aux mesures condensées déterminées à partir des images de recalage $I_{n1}$, $I_{n2}$ et $I_{n3}$.

Sélection du triplet d'images de recalage

Dans une variante de mise en œuvre du procédé 10 d'estimation, compatible avec l'un quelconque des modes de mise en œuvre précédemment décrits, les images de recalage du triplet sont des images sélectionnées parmi une pluralité d'images acquises par le senseur de vision. En d'autres termes, les instants d'acquisition $t_{n1}$, $t_{n2}$ et $t_{n3}$ ne sont pas nécessairement espacés dans le temps de la période temporelle $\Delta T$. Cette sélection des images de recalage revient à effectuer une compression des images acquises pour n'en conserver qu'un sous-ensemble pour l'estimation du mouvement du porteur.

De préférence, au moins une image de recalage du triplet est une image pour laquelle un critère de détection de déplacement du porteur a été vérifié. Suivant un exemple, le critère de détection de déplacement du porteur est vérifié lorsque, une première image de recalage étant sélectionnée et un nombre entier N de points caractéristiques $M'_i$ étant identifiés dans ladite première image de recalage, on sélectionne une seconde image de recalage comme étant une image ultérieure à la première image de recalage dans laquelle au moins Nb des N points caractéristiques $M'_i$ de la première image ne sont plus visibles, Nb étant sensiblement égal à un pourcentage $r_P$ prédéfini de N, soit sensiblement égal à $rP \cdot N$.

Le pourcentage $r_P$ prédéfini de points caractéristiques $M'_i$ qui ne sont plus visibles sur la seconde image de recalage est de préférence égal ou supérieur à 20%, par exemple égal à 25%.

Ainsi, ayant identifié N points caractéristiques $M'_i$ visibles sur l'image de recalage $I_{n1}$ (typiquement N de l'ordre de 300), on les suit dans les images suivantes acquises par l'instrument d'observation jusqu'à ce qu'au moins Nb points caractéristiques, Nb étant sensiblement égal à $r_P \cdot N$, ne soient plus visibles dans une image ultérieure. Cette image ultérieure est alors considérée comme étant la seconde image de recalage $I_{n2}$ du triplet. De même, la troisième image de recalage $I_{n3}$ du triplet est choisie comme étant une image ultérieure à l'image de recalage $I_{n2}$, dans laquelle au moins Nb points caractéristiques, Nb étant sensiblement égal à $r_P \cdot N$, ne sont plus visibles dans cette image ultérieure alors qu'ils l'étaient dans la seconde image de recalage In2.

L'intérêt d'un tel choix des instants n2 et n3 par rapport à l'instant n1 est qu'il résume de façon synthétique tout un ensemble de contraintes à satisfaire pour résoudre le problème donné, comme par exemple le fait d'attendre que le porteur se soit déplacé suffisamment par rapport à l'environnement 20 pour rendre ce déplacement observable à partir des images de recalage. A contrario, on assure également que le porteur ne se soit pas trop déplacé, de sorte à conserver un nombre suffisamment grand de points caractéristiques $M'_i$ communs aux les images de recalage sélectionnées.

Ainsi, ce choix des instants n1, n2, n3 est avantageux en ce qu'il permet de s'adapter automatiquement au champ de vue de la caméra et à la dynamique du porteur par rapport à l'environnement, et plus exactement à l'impact de cette dynamique sur le système de vision. Par exemple, si l'image de l'environnement change lentement du fait que le porteur est très éloigné des points caractéristiques $M'_i$, ou qu'il en est rapproché mais se déplace avec une faible vitesse, les instants n1, n2, n3 pourront être espacés de quelques dizaines de secondes à quelques minutes par exemple. Au contraire, si le porteur est proche des points caractéristiques $M'_i$ avec une grande vitesse, l'espacement entre n1, n2, n3 sera faible, par exemple de quelques dixièmes de secondes à quelques secondes.

Il est à noter qu'un critère basé sur la disparition d'un pourcentage $r_P$ prédéfini des N points caractéristiques $M'_i$ identifiés est particulièrement adapté au cas où le porteur s'approche de l'environnement 20. En alternative ou en complément, on considère un critère basé sur l'apparition d'au moins un nombre Nb de points caractéristiques $M'_i$ d'une image à l'autre, Nb étant sensiblement égal à $r_P \cdot N$. Un tel critère est particulièrement adapté au cas où le porteur s'éloigne de l'environnement 20.

Les critères de détection de déplacement du porteur basés sur l'apparition ou la disparition de points caractéristiques sont particulièrement adaptés aux porteurs subissant une accélération constante, comme par exemple les atterrisseurs. Les instants n2 et n3 peuvent également être sélectionnés en fonction d'un profil d'accélération du porteur, lorsqu'il est connu a priori, afin notamment d'optimiser l'observabilité de la vitesse.

Cependant, on comprendra que la sélection des images de recalage du triplet, en particulier des instants n2 et n3 par rapport à l'instant n1, peut se faire suivant tout autre critère de détection de déplacement du porteur, comme par exemple un critère analytique prenant en compte les différents paramètres en jeu (champ de vue de l'instrument d'observation, éloignement estimé du porteur par rapport aux points caractéristiques $M'_i$ de l'environnement 20, vitesse estimée du porteur, accélération estimée du porteur, etc.), ou bien à des fins d'optimisation de l'observabilité de l'évolution du mouvement du porteur.

Une fois un premier triplet d'images de recalage sélectionné, les triplets suivants peuvent être choisis indépendamment de ce premier triplet d'images, ou bien à partir de ce premier triplet d'images de recalage.

Suivant un premier exemple, on considère des triplets correspondant à des fenêtres glissantes d'images de recalage. Par exemple, on considère d'abord un triplet constitué par les images $I_{n1}$, $I_{n2}$, $I_{n3}$, puis on considère un triplet constitué par les images $I_{n2}$, $I_{n3}$, $I_{n4}$, puis on considère un triplet constitué par les images $I_{n3}$, $I_{n4}$, $I_{n5}$, etc.

Suivant un autre exemple, on traite en outre le triplet $I_{n1}$, $I_{n3}$, $I_{n5}$, et éventuellement tout autre triplet obtenu à partir des images $I_{n1}$, $I_{n2}$, $I_{n3}$, $I_{n4}$, $I_{n5}$

Elimination de points caractéristiques aberrants

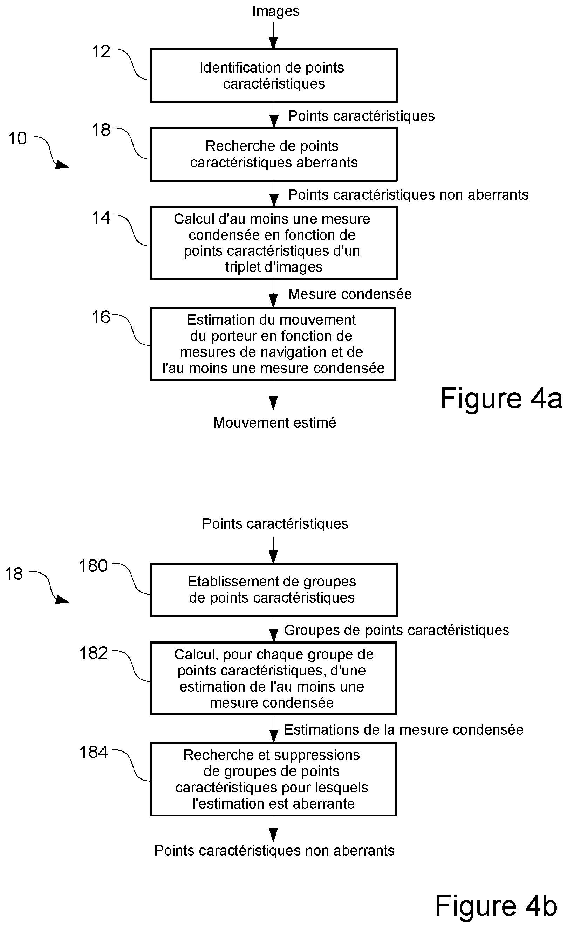

Dans une variante préférée de mise en œuvre, illustrée par la figure 4a, le procédé 10 comporte une étape 18 de recherche de points caractéristiques aberrants parmi la pluralité de points caractéristiques des images, des points caractéristiques considérés comme aberrants n'étant pas considérés au cours de l'étape 14 de calcul.

En effet, un avantage de sélectionner les images de recalage du triplet parmi une pluralité d'images réside dans le fait que la durée séparant les prises d'images va être généralement plus importante que dans l'art antérieur (dans lequel on considère les images obtenues à la cadence d'acquisition des images, c'est-à-dire $\Delta T$). Ainsi, on pourra surveiller l'évolution dans le temps des propriétés des points caractéristiques identifiés dans les images, et supprimer ceux dont l'évolution apparait incohérente avec l'hypothèse que ces points caractéristiques représentent des points immobiles de l'environnement.

Toute méthode de suppression de données aberrantes, comme par exemple la méthode « Random Sample Consensus » (appelée couramment RANSAC) peut être utilisée pour éliminer les points caractéristiques aberrants. Une telle méthode est décrite dans l'article de Martin A. Fischler et Robert C. Bolles « Random Sample Consensus: A Paradigm for Model Fitting with Applications to Image Analysis and Automated Cartography », dans Comm. Of the ACM, vol. 24, June 1981, p. 381-395.

La figure 4b représente un mode préféré de mise en œuvre de l'étape 18 de recherche de points caractéristiques aberrants. Pour la description de la figure 4a, on se place dans le cas non limitatif où l'on recherche des points caractéristiques aberrants en vue d'un calcul d'une mesure condensée représentative du rapport des distances parcourues, c'est-à-dire dans le cas nécessitant d'identifier des points caractéristiques de l'environnement visibles sur chacune des trois images de recalage du triplet.

Tel qu'illustré par la figure 4b, l'étape 18 comporte une sous-étape 180 au cours de laquelle on établit des groupes de points caractéristiques du triplet d'images représentant 5 points caractéristiques de l'environnement visibles sur chacune des images du triplet.

L'étape 18 comporte ensuite une sous-étape 182 au cours de laquelle on calcule, pour chaque groupe de points caractéristiques des images, une estimation de la mesure condensée représentative du rapport des distances parcourues.

L'étape 18 comporte ensuite une sous-étape 184 au cours de laquelle on recherche des groupes pour lesquels l'estimation de la mesure condensée représentative du rapport des distances parcourues est aberrante par rapport à l'ensemble des estimations. Les points caractéristiques de tels groupes, pour lesquels l'estimation de la mesure condensée représentative du rapport des distances parcourues est considérée aberrante, ne sont pas utilisés au cours de l'étape 14 de calcul.

En effet, comme nous l'avons vu précédemment, une mesure condensée représentative du rapport des distances parcourues (respectivement une mesure condensée représentative d'une pose relative normalisée), peut être obtenue à partir des points caractéristiques du triplet d'images de recalage (respectivement d'une paire d'images de recalage) représentant 5 points caractéristiques de l'environnement. On peut donc estimer plusieurs fois un même mesure condensée en considérant différents groupes de points caractéristiques représentant 5 points caractéristiques de l'environnement parmi tous les points caractéristiques identifiés, et éliminer par une méthode de type RANSAC les estimations qui, résultant d'un groupe représentant 5 points caractéristiques de l'environnement parmi lesquels il y aurait au moins un point caractéristique aberrant, seraient très éloignées d'un grand nombre d'estimations proches les unes des autres et jugées cohérentes. On peut également éliminer les groupes de points caractéristiques aberrants en calculant une valeur moyenne $\mu$ et un écart-type $\sigma$ des estimations, et ne pas conserver les points caractéristiques des groupes pour lesquels l'estimation obtenue est très éloignée de la valeur moyenne $\mu$, par exemple éloignée de plus de $k \cdot \sigma$, k étant par exemple égal à 2 ou 3.

Il est à noter que rien n'exclut, suivant certains exemples de mise en œuvre, de considérer des groupes de points caractéristiques des images représentant plus que 5 points caractéristiques de l'environnement.

Généralisation du procédé 10 à des éléments caractéristiques

Les exemples de mise en œuvre du procédé 10 décrits précédemment sont basés sur l'utilisation de points caractéristiques apparaissant dans les images. Les traitements associés sont simples et efficaces en temps de calcul. Cependant, d'autres techniques de traitement d'images peuvent être utilisées pour calculer les mesures condensées.

De manière plus générale, le procédé 10 d'estimation utilise des éléments caractéristiques des images, considérés comme représentant des éléments caractéristiques de l'environnement. En particulier, le procédé 10 utilise, suivant d'autres exemples, des objets caractéristiques ou une ou des surfaces caractéristiques, qui sont discutés ci-après.

### a) Objets caractéristiques

Des objets caractéristiques, liés à l'environnement, sont par exemple des segments de droite dans le cas le plus simple (cas très fréquent lorsque le porteur se déplace vis-à-vis d'un environnement structuré, par exemple comportant des bâtiments). Le suivi de tels objets caractéristiques d'une image à l'autre s'effectue par exemple tel que décrit dans la publication scientifique des auteurs Peer Neubert, Peter Protzel, Teresa Vidal-Calleja and Simon Lacroix, « A fast Visual Line Segment Tracker » in IEEE Int. Conf. on Emerging Technologies and Factory Automation, Hamburg (Germany), Sept. 2008

Ces objets peuvent être reconnus, appariés et pistés d'une image à l'autre. Les différences en position et orientation de ces objets d'une image à l'autre renseignent sur la variation en position et attitude du porteur par rapport à l'environnement, puisque des relations géométriques relient les uns aux autres. Il suffit en général d'un nombre réduit de tels objets pour estimer sans ambiguïté les poses relatives normalisées d'une image à l'autre, et les rapports de distance parcourue dans un triplet d'images, comme décrit précédemment dans le cas des points caractéristiques.

Par exemple, un segment de droite dans l'image peut être décrit par deux paramètres : la distance au centre du plan focal et l'angle d'orientation dans le plan focal. Ce segment de droite dans l'image représente un segment caractéristique de l'environnement qui peut être lui-même paramétré en trois dimensions. La variation du segment de droite d'une image à l'autre fournit deux paramètres qui sont les variations de cette distance et de cet angle. La variation de ces paramètres dépend géométriquement de la position et de l'orientation du segment de droite de l'environnement dans le repère de référence lié au porteur, et du déplacement du porteur d'une image à l'autre. Ces relations géométriques peuvent être utilisées pour estimer les mesures condensées, de la même façon que les positions des points caractéristiques $M_i$ dans l'image ont été utilisées pour estimer ces mesures condensées. On peut avantageusement utiliser une combinaison de points caractéristiques et d'objets, par exemple en considérant les extrémités d'un objet caractéristique de type segment de droite.

### b) Surfaces caractéristiques

Dans une autre variante du procédé, en particulier lorsque le porteur se déplace dans des environnements faiblement structurés (par exemple survol de terrains), on peut supposer que les pixels rapprochés dans l'image représentent des points rapprochés dans l'environnement et que l'environnement, ou une partie de cet environnement (que l'on appellera « terrain » dans ce cas) peut être décrit par une surface continue, dite surface caractéristique de l'environnement. L'objectif peut être d'identifier dans sa globalité la partie de la surface du terrain visible dans deux ou trois images (sans l'intermédiaire de points ou d'objets caractéristiques) en même temps qu'on estime les mesures condensées. Par exemple, on décrit la surface du terrain sous la forme de maillages 3D paramétrés (typiquement quelques centaines de paramètres). En utilisant un premier couple d'images ($I_{n1}$,$I_{n2}$) (on suppose qu'il y a eu un déplacement en position entre les deux images), on estime à la fois les paramètres de la surface et la mesure condensée de pose relative normalisée en utilisant le plus grand nombre de pixels possibles (ceux représentant les points de l'environnement visibles sur les deux images), sans distinction de points ou d'objets caractéristiques. Ceci peut se faire par exemple en utilisant des techniques de traitement stéréoscopiques comme par exemple celles données dans l'article de S. M. Seitz, B. Curless, J. Diebel, D. Scharstein, et R. Szeliski, « A Comparison and Evaluation of Multi-View Stereo Reconstruction Algorithms » in Proc. CVPR 2006. Le relief est ainsi estimé « par effet stéréoscopique » à partir du couple d'images ($I_{n1}$, $I_{n2}$). Cette estimation s'effectue à un facteur d'échelle près, donné par la distance parcourue entre n1 et n2 (équivalent à la base d'une paire d'images stéréoscopiques). Imaginons que cette distance soit connue, ce qui lève l'ambiguïté sur la surface du terrain. Cette surface étant maintenant estimée, on peut prédire l'évolution de l'image de cette surface à un instant n3 ultérieur à n2, en fonction de la pose absolue entre les instants n2 et n3 (on peut éventuellement utiliser un modèle d'illumination et de réflectance du terrain). En corrélant l'image prédite en n3 avec l'image réelle $I_{n3}$, on pourra donc estimer non seulement la pose relative normalisée entre les instants n2 et n3 comme précédemment, mais également la distance parcourue entre n2 et n3, comme étant la distance qui maximise la corrélation entre l'image prédite pour cette distance et l'image réelle. Si on n'utilise que les informations contenues dans l'image, la distance parcourue entre n1 et n2 n'est pas observable, ni la distance parcourue entre n2 et n3, mais le rapport des distances parcourues entre respectivement (n1, n2) et (n2, n3) le sera.

### Avantages du procédé 10 par rapport à l'art antérieur

Le nombre de paramètres scalaires ajoutés au vecteur d'états du filtre de navigation est avantageusement fixe et égal à 18 (sur la base d'une mémorisation des états $X_{n1}$, $X_{n2}$ et $X_{n3}$ comprenant chacun 6 paramètres scalaires) au lieu de plusieurs centaines de paramètres additionnels avec les techniques de l'état de l'art.

En outre, le nombre de mesures additionnelles est également significativement réduit et optimisé, avantageusement limité aux mesure condensées au lieu de l'ensemble des positions des points caractéristiques de l'image dans l'art antérieur. Ainsi, seulement quelques paramètres (mesure condensée représentative du rapport des distances parcourues, mesure condensée représentative de la direction de déplacement ou de la pose relative normalisée) sont ajoutés aux mesures de navigation au lieu de plusieurs centaines (la position des points caractéristiques dans l'image) dans l'art antérieur.

De plus la complexité associée à l'étape 14 de calcul est, dans le cas où les éléments caractéristiques sont des points caractéristiques, linéaire avec le nombre $N_{123}$ de points caractéristiques $M'_i$ considérés, visibles sur les trois images de recalage du triplet. La complexité introduite par l'étape 14 de calcul est inférieure, voire significativement inférieure à la complexité associée au traitement, par le filtre de navigation, de l'ensemble des positions des points caractéristiques $M_i$ dans chacune des images.

En outre le traitement des images intermédiaires (entre les instants n1 et n2, n2 et n3, etc.) peut n'être réduit qu'au suivi des éléments caractéristiques par corrélation d'image. On comprend dès lors l'efficacité du procédé en termes de volume de calculs à effectuer. Les avantages en termes de traitement sont très importants : réduction du nombre d'images traitées, traitement des images proportionnel au nombre de points, possibilité d'effectuer des calculs en parallèle, etc.

L'étape 14 de calcul qui permet de calculer la mesure condensée autorise la prise en compte de tous les points caractéristiques identifiés sans avoir à en sélectionner un nombre réduit. Dans l'art antérieur, il était courant de ne conserver que 10% des points caractéristiques pour des raisons de complexité de calcul. Ce n'est plus le cas ici puisque l'étape 14 de calcul permet de synthétiser les informations dérivées de tous les points caractéristiques en un nombre limité de paramètres.

Exemples non limitatifs d'application de l'invention

L'utilisation de l'invention est avantageuse dans de nombreux cas, par exemple :

- porteurs subissant de fortes accélérations (atterrisseurs, missiles) : le porteur étant en accélération, les mesures condensées contiennent une information sur la vitesse et l'accélération par rapport à l'environnement ; l'accélération étant connue par la connaissance a priori de la commande ou via une mesure de l'accélération, on peut en déduire la vitesse relative ;
- porteurs au sol : si le mouvement entre les deux premières images $I_{n1}$ et $I_{n2}$ est connu en utilisant une odométrie externe ou une navigation par satellites (GPS, même limité à un nombre de satellites inférieur à 4) par exemple, les mesures condensées permettent de propager cette connaissance à l'image $I_{n3}$; les mesures condensées peuvent être utilisées en complément de l'odométrie ou en remplacement de celle-ci en cas de dérapage, ou bien en complément d'une navigation par satellites en cas d'indisponibilité temporaire (canyons urbains, etc.) ;
- rendez-vous de deux porteurs spatiaux : avant le démarrage des opérations de rendez-vous, les porteurs sont en général en attente et quasiment fixes l'un par rapport à l'autre ; il est important d'acquérir au moins deux images pendant cette phase, de sorte que l'acquisition d'une autre image peu de temps après la mise en accélération du porteur chasseur permette une observabilité de la distance relative entre les porteurs en utilisant les mesures condensées ;
- localisation de porteurs a posteriori : les traitements proposés peuvent s'effectuer sur des données enregistrées en vol puis stockées et traitées au sol après le vol.

**Revendications**

1. Procédé (10) d'estimation du mouvement d'un porteur par rapport à un environnement (20) vis-à-vis duquel ledit porteur se déplace, le porteur embarquant au moins un senseur de navigation et au moins un senseur de vision produisant des images 2D de l'environnement, **caractérisé en ce qu'**il comporte les étapes de :

   - (12) identification, dans des images acquises par le senseur de vision, d'éléments caractéristiques des images représentant des éléments caractéristiques de l'environnement,
   - (14) calcul d'au moins une mesure condensée en fonction d'éléments caractéristiques d'un triplet d'images acquises à des instants différents, l'au moins une mesure condensée étant représentative de caractéristiques du mouvement du porteur au cours de l'acquisition des images dudit triplet, l'au moins une mesure condensée étant représentative :

      o d'un rapport des distances parcourues par le porteur entre les instants d'acquisition de deux paires d'images dudit triplet, déterminée en fonction d'éléments caractéristiques des images du triplet représentant des éléments caractéristiques de l'environnement visibles sur chacune des trois images dudit triplet, et/ou

o d'une direction de déplacement du porteur ou d'une pose relative normalisée entre les instants d'acquisition d'une paire d'images du triplet, déterminée en fonction d'éléments caractéristiques de cette paire d'images représentant des éléments caractéristiques de l'environnement visibles sur chacune des deux images de cette paire,

- (16) estimation du mouvement par un filtre d'estimation, dit « filtre de navigation », en fonction de mesures de navigation réalisées par le senseur de navigation et en fonction de l'au moins une mesure condensée.

2. Procédé (10) selon la revendication 1, **caractérisé en ce que** les éléments caractéristiques sont des points caractéristiques et/ou des objets caractéristiques ou une ou des surfaces caractéristiques.

3. Procédé (10) selon l'une des revendications précédentes, **caractérisé en ce que** les images du triplet sont des images sélectionnées parmi une pluralité d'images acquises par le senseur de vision.

4. Procédé (10) selon la revendication 3, **caractérisé en ce qu'**au moins une image du triplet est une image pour laquelle un critère de détection de déplacement du porteur est vérifié.

5. Procédé (10) selon la revendication 4, **caractérisé en ce que** le critère de détection de déplacement du porteur est vérifié pour une seconde image lorsque, une première image étant sélectionnée et une pluralité d'éléments caractéristiques de l'environnement, au nombre de N, étant visibles dans ladite première image :

- au moins Nb des N éléments caractéristiques de l'environnement ont disparu dans ladite seconde image, ou
- au moins Nb nouveaux éléments caractéristiques de l'environnement sont apparus dans ladite seconde image,

Nb étant sensiblement égal à $r_P \cdot N$, $r_P$ étant un pourcentage prédéfini.

6. Procédé (10) selon la revendication 5, **caractérisé en ce que** le pourcentage prédéfini $r_P$ est égal ou supérieur à 20%, de préférence sensiblement égal à 25%.

7. Procédé (10) selon l'une des revendications précédentes, **caractérisé en ce qu'** il comporte une étape (18) de recherche d'éléments caractéristiques aberrants parmi la pluralité d'éléments caractéristiques des images, des éléments caractéristiques considérés comme aberrants n'étant pas considérés au cours de l'étape (14) de calcul.

8. Procédé (10) selon la revendication 7, **caractérisé en ce que** l'étape (18) de recherche d'éléments caractéristiques aberrants des images comporte les sous-étapes de :

- (180) établissement de groupes d'éléments caractéristiques représentant au moins cinq éléments caractéristiques de l'environnement visibles sur chacune des images d'une paire et/ou du triplet à utiliser pour calculer une mesure condensée,
- (182) calcul, pour chaque groupe d'éléments caractéristiques des images, d'une estimation de la mesure condensée à calculer,
- (184) recherche de groupes d'éléments caractéristiques aberrants pour lesquels l'estimation de ladite mesure condensée à calculer est aberrante par rapport à l'ensemble des estimations de ladite mesure condensée à calculer.

9. Procédé (10) selon l'une des revendications précédentes, **caractérisé en ce que**, au cours de l'étape (14) de calcul, on estime l'erreur commise sur l'estimation de l'au moins une mesure condensée, et **en ce que**, au cours de l'étape (16) d'estimation, le mouvement du porteur est estimé en fonction de l'estimation de l'erreur commise sur l'estimation de l'au moins une mesure condensée.

10. Dispositif de calcul pour système de navigation d'un porteur embarquant au moins un senseur de navigation et au moins un senseur de vision, **caractérisé en ce qu'** il comporte des moyens configurés pour estimer le mouvement du porteur conformément à l'une des revendications précédentes.

**Patentansprüche**

1. Verfahren (10) zur Schätzung der Bewegung eines Trägers im Verhältnis zu einer Umgebung (20), gegenüber welcher sich der Träger fortbewegt, wobei der Träger mindestens einen Navigationssensor und mindestens einen Sichtsensor, der 2D-Bilder der Umgebung erzeugt, aufweist, **dadurch gekennzeichnet, dass** es die folgenden Schritte aufweist:

- (12) Identifizieren, in Bildern, die vom Sichtsensor erfasst werden, von charakteristischen Elementen der Bilder, die charakteristische Elemente der Umgebung repräsentieren,
- (14) Berechnen mindestens einer verdichteten Messung in Abhängigkeit von charakteristischen Elementen eines Tripletts von Bildern, die zu unterschiedlichen Zeitpunkten erfasst werden, wobei die mindestens eine verdichtete Messung für Charakteristika der Bewegung des Trägers im Verlauf des Erfassens der Bilder des Tripletts repräsentativ ist, wobei die mindestens eine verdichtete Messung für Folgendes repräsentativ ist:

  ∘ ein Verhältnis der Strecken, die vom Träger zwischen den Zeitpunkten der Erfassung zweier Bildpaare des Tripletts zurückgelegt werden, das in Abhängigkeit von charakteristischen Elementen der Bilder des Tripletts bestimmt wird, die charakteristische Elemente der Umgebung repräsentieren, die auf jedem der drei Bilder des Tripletts sichtbar sind, und/oder
  ∘ eine Fortbewegungsrichtung des Trägers oder eine normalisierte relative Pose zwischen den Zeitpunkten der Erfassung eines Bildpaars des Tripletts, die in Abhängigkeit von charakteristischen Elementen dieses Bildpaars bestimmt wird, die charakteristische Elemente der Umgebung repräsentieren, die auf jedem der zwei Bilder dieses Paars sichtbar sind,

- (16) Schätzen der Bewegung durch einen Schätzfilter, den "Navigationsfilter", in Abhängigkeit von Navigationsmessungen, die vom Navigationssensor und in Abhängigkeit von der mindestens einen verdichteten Messung durchführt werden.

2. Verfahren (10) nach Anspruch 1, **dadurch gekennzeichnet, dass** die charakteristischen Elemente charakteristische Punkte und/oder charakteristische Objekte oder eine oder mehrere charakteristischen Flächen sind.

3. Verfahren (10) nach einem der vorhergehenden Ansprüche, **dadurch gekennzeichnet, dass** die Bilder des Tripletts Bilder sind, die aus einer Mehrzahl von Bildern ausgewählt werden, die vom Sichtsensor erfasst werden.

4. Verfahren (10) nach Anspruch 3, **dadurch gekennzeichnet, dass** wenigstens ein Bild des Tripletts ein Bild ist, für welches ein Fortbewegungsdetektionskriterium des Trägers überprüft wird.

5. Verfahren (10) nach Anspruch 4, **dadurch gekennzeichnet, dass** das Fortbewegungsdetektionskriterium des Trägers für ein zweites Bild überprüft wird, wenn, wobei ein erstes Bild ausgewählt ist und eine Mehrzahl von charakteristischen Elementen der Umgebung, der Anzahl N, im ersten Bild sichtbar sind:

- mindestens Nb der N charakteristischen Elemente der Umgebung im zweiten Bild verschwunden sind, oder
- mindestens Nb neue charakteristische Elemente der Umgebung im zweiten Bild erschienen sind,

wobei Nb im Wesentlichen gleich rP·N ist, wobei $r_P$ ein vorgegebener Prozentsatz ist.

6. Verfahren (10) nach Anspruch 5, **dadurch gekennzeichnet, dass** der vorgegebene Prozentsatz $r_P$ gleich oder größer als 20 %, vorzugsweise im Wesentlichen gleich 25 % ist.

7. Verfahren (10) nach einem der vorhergehenden Ansprüche, **dadurch gekennzeichnet, dass** es einen Schritt (18) des Suchens abweichender charakteristischer Elemente aus der Mehrzahl von charakteristischen Elementen der Bilder aufweist, wobei charakteristische Elemente, die als abweichend angesehen werden, im Verlauf des Schritts (14) des Berechnens nicht berücksichtigt werden.

8. Verfahren (10) nach Anspruch 7, **dadurch gekennzeichnet, dass** der Schritt (18) des Suchens abweichender charakteristischer Elemente der Bilder die folgenden Unterschritte aufweist:

- (180) Erstellen von Gruppen von charakteristischen Elementen, die mindestens fünf charakteristische Elemente der Umgebung repräsentieren, die auf jedem der Bilder eines Paars und/oder des Tripletts sichtbar sind, die zur Berechnung einer verdichteten Messung zu nutzen sind,
- (182) Berechnen, für jede Gruppe von charakteristischen Elementen der Bilder, einer Schätzung der zu berechnenden verdichteten Messung,

- (184) Suchen von Gruppen von abweichenden charakteristischen Elementen, für welche die Schätzung der zu berechnenden verdichteten Messung im Verhältnis zur Gesamtheit der Schätzungen der zu berechnenden verdichteten Messung abweichend ist.

9. Verfahren (10) nach einem der vorhergehenden Ansprüche, **dadurch gekennzeichnet, dass** im Verlauf des Schritts (14) des Berechnens der Fehler geschätzt wird, der beim Schätzen der mindestens einen verdichteten Messung auftritt, und dadurch, dass im Verlauf des Schritts (16) des Schätzens die Bewegung des Trägers in Abhängigkeit von der Schätzung des Fehlers geschätzt wird, der beim Schätzen der mindestens einen verdichteten Messung auftritt.

10. Rechenvorrichtung für ein Navigationssystem eines Trägers, der mindestens einen Navigationssensor und mindestens einen Sichtsensor aufweist, **dadurch gekennzeichnet, dass** sie Mittel aufweist, die dazu ausgebildet sind, die Bewegung des Trägers nach einem der vorhergehenden Ansprüche zu schätzen.

**Claims**

1. A method (10) for estimating the movement of a carrier with respect to an environment (20) relative to which said carrier is moving, the carrier embedding at least one navigation sensor and at least one vision sensor producing 2D images of the environment, **characterised in that** it includes the steps of:

   - (12) identifying, in images acquired by the vision sensor, characteristic elements of the images representing characteristic elements of the environment,
   - (14) calculating at least one condensed measurement based on characteristic elements of a triplet of images acquired at different times, the at least one condensed measurement being representative of characteristics of the movement of the carrier during the acquisition of the images of said triplet, the at least one condensed measurement being representative:

     ∘ of a ratio of the distances travelled by the carrier between the acquisition times of two pairs of images of said triplet, determined based on characteristic elements of the images of the triplet representing characteristic elements of the environment which are visible on each of the three images of said triplet, and/or
     ∘ of a direction of displacement of the carrier or a normalised relative pose between the acquisition times of a pair of images of the triplet, determined based on characteristic elements of this pair of images representing characteristic elements of the environment which are visible on each of the two images of this pair,

   - (16) estimating the movement by an estimation filter, called "navigation filter", based on navigation measurements made by the navigation sensor and based on the at least one condensed measurement.

2. The method (10) according to claim 1, **characterised in that** the characteristic elements are characteristic points and/or characteristic objects or one or more characteristic surface(s).

3. The method (10) according to any of the preceding claims, **characterised in that** the images of the triplet are images selected from a plurality of images acquired by the vision sensor.

4. The method (10) according to claim 3, **characterised in that** at least one image of the triplet is an image for which a carrier displacement detection criterion is verified.

5. The method (10) according to claim 4, **characterised in that** the carrier displacement detection criterion is verified for a second image when, a first image being selected and a plurality of characteristic elements of the environment, N in number, being visible in said first image:

   - at least Nb of the N characteristic elements of the environment have disappeared in said second image, or
   - at least Nb new characteristic elements of the environment have appeared in said second image,

   Nb being substantially equal to $r_P \cdot N$, $r_P$ being a predefined percentage.

6. The method (10) according to claim 5, **characterised in that** the predefined percentage $r_P$ is equal to or greater than 20%, preferably substantially equal to 25%.

7. The method (10) according to any of the preceding claims, **characterised in that** it includes a step (18) of searching for aberrant characteristic elements of the plurality of characteristic elements of the images, characteristic elements considered to be aberrant not being considered during the calculation step (14).

8. The method (10) according to claim 7, **characterised in that** the step (18) of searching for aberrant characteristic elements of the images includes the sub-steps of:

> - (180) establishing groups of characteristic elements representing at least five characteristic elements of the environment which are visible on each of the images of a pair and/or of the triplet to be used for calculating a condensed measurement,
> - (182) calculating, for each group of characteristic elements of the images, an estimate of the condensed measurement to be calculated,
> - (184) searching for groups of aberrant characteristic elements for which the estimate of said condensed measurement to be calculated is aberrant relative to the set of estimates of said condensed measurement to be calculated.

9. The method (10) according to any of the preceding claims, **characterised in that**, during the calculation step (14), the error made on the estimate of the at least one condensed measurement is estimated, and **in that**, during the estimation step (16), the movement of the carrier is estimated depending on the estimate of the error made on the estimate of the at least one condensed measurement.

10. A calculating device for a navigation system of a carrier embedding at least one navigation sensor and at least one vision sensor, **characterised in that** it includes means configured to estimate the movement of the carrier in accordance with any of the preceding claims.

Images

10 ⟍ 12 ⟍

Identification de points
caractéristiques

Figure 1

Points caractéristiques

14 ⟍

Calcul d'au moins une mesure
condensée en fonction de
points caractéristiques d'un
triplet d'images

Mesure condensée

16 ⟍

Estimation du mouvement
du porteur en fonction de
mesures de navigation et de
l'au moins une mesure condensée

Mouvement estimé

$M_i^{n1}$

$M_j^{n3}$

$M_i^{n2}$

Figure 2

Figure 3

$M'_1$

$M'_2$

$M'_{i-1}$

$M'_{i+1}$

$M'_i$

$M'_N$

$\rho_{n3,i}$

$\rho_{n2,i}$

$\rho_{n1,i}$

$P_{n1}$

$P_{n2}$

$P_{n3}$

Images

12 — Identification de points caractéristiques

Points caractéristiques

10 — 18 — Recherche de points caractéristiques aberrants

Points caractéristiques non aberrants

14 — Calcul d'au moins une mesure condensée en fonction de points caractéristiques d'un triplet d'images

Mesure condensée

16 — Estimation du mouvement du porteur en fonction de mesures de navigation et de l'au moins une mesure condensée

Mouvement estimé

## Figure 4a

Points caractéristiques

18 — 180 — Etablissement de groupes de points caractéristiques

Groupes de points caractéristiques

182 — Calcul, pour chaque groupe de points caractéristiques, d'une estimation de l'au moins une mesure condensée

Estimations de la mesure condensée

184 — Recherche et suppressions de groupes de points caractéristiques pour lesquels l'estimation est aberrante

Points caractéristiques non aberrants

## Figure 4b

## RÉFÉRENCES CITÉES DANS LA DESCRIPTION

**Documents brevets cités dans la description**

- US 2003012410 A1

**Littérature non-brevet citée dans la description**

- **B. FRAPARD et al.** Navigation for Planetary Approach and Landing. *5th International ESA Conférence on Guidance Navigation and Control Systems,* 22 Octobre 2002
- **B. POLIE et al.** Autonomous Navigation Concepts for Interplanetary Missions. *IFAC Symposium on Automatic Control in Aerospace,* 14 Juin 2004
- **X. SEMBÉLY et al.** Mars Sample Return : Optimising the Descent and Soft Landing for an Autonomous Martian Lander. *Symposium on Atmospheric Reentry Vehicles and Systems,* 23 Mars 2005
- **G. BODINEAU et al.** Vision Navigation for European Landers and the NPAL Project. *IFAC Symposium on Automatic Control in Aerospace,* 25 Juin 2007

- **MARTIN A. FISCHLER ; ROBERT C. BOLLES.** Random Sample Consensus: A Paradigm for Model Fitting with Applications to Image Analysis and Automated Cartography. *Comm. Of the ACM,* Juin 1981, vol. 24, 381-395
- **PEER NEUBERT ; PETER PROTZEL ; TERESA VIDAL-CALLEJA ; SIMON LACROIX.** A fast Visual Line Segment Tracker. *IEEE Int. Conf. on Emerging Technologies and Factory Automation,* Septembre 2008
- **S. M. SEITZ ; B. CURLESS ; J. DIEBEL ; D. SCHARSTEIN ; R. SZELISKI.** A Comparison and Evaluation of Multi-View Stereo Reconstruction Algorithms. *Proc. CVPR,* 2006